# EUROPEAN PATENT APPLICATION

(11) **EP 4 133 949 A1**
(43) Date of publication of application: **15.02.2023**
(21) Application number: 21191322.3
(22) Date of filing: 13.08.2021
(51) Int. Cl.: A23L 2/54, A47J 31/00, A47J 31/44

(54) **CHECK VALVE ON SUB-MACHINE OF SODA FOUNTAIN**

(71) Applicant: Guan, Jin Ye, Cui Shan Hu New District Kaiping City Guangdong Province (CN)
(72) Inventor: Guan, Jin Ye, Cui Shan Hu New District Kaiping City Guangdong Province (CN)
(74) Representative: Sánchez Margareto, Carolina

(57) **Abstract**

A check valve on a sub-machine of a soda fountain includes a main body of the sub-machine and an air nozzle rod, where the air nozzle rod is connected to the main body, the main body is provided with an internal thread cavity with a lower opening and an air inlet channel communicated with the internal thread cavity, and the air nozzle rod is provided with a check valve cavity with an external thread; the check valve further includes a check valve assembly, the check valve assembly is arranged in the check valve cavity, and the check valve cavity is screwed and hermetically sealed with the internal thread cavity. Such a structure can prevent air flow from flowing back and improve the sealing performance is improved, and is convenient to assemble.

## Description

### TECHNICAL FIELD

The present disclosure relates to a soda fountain, and in particular, to a check valve on a sub-machine of a soda fountain.

### BACKGROUD

At present, in the prior art, a check valve on a sub-machine of a soda fountain includes a main body of the sub-machine and an air nozzle rod, where the air nozzle rod is connected to the main body. The check valve has the problems of complex structure, inconvenience in assembly, and high cost.

### SUMMARY

An objective of the present disclosure is to provide a check valve on a sub-machine of a soda fountain, which features good sealing performance and convenience in assembly.

The present disclosure is implemented in this way: a check valve on a sub-machine of a soda fountain includes a main body of the sub-machine and an air nozzle rod, where the air nozzle rod is connected to the main body, the main body is provided with an internal thread cavity with a lower opening and an air inlet channel communicated with the internal thread cavity,
the air nozzle rod is provided with a check valve cavity with an external thread; and
the check valve further includes a check valve assembly, the check valve assembly is arranged in the check valve cavity, and the check valve cavity is screwed and hermetically sealed with the internal thread cavity.

In the check valve on a sub-machine of a soda fountain, the check valve assembly includes a valve seat, a valve body and a cylindrical valve core made of a rubber material,
the valve seat includes a cylindrical seat, a cavity body arranged at an upper end of the cylindrical seat and provided with an upper opening, and an axial pin arranged on the cavity body, and the valve seat is provided with air guide grooves located on a circumferential surface and a bottom end face of the cylindrical seat;
the valve body includes a valve cavity with an upper opening, an annular seat surrounding an upper end of the valve cavity, and a radial air outlet hole formed in the valve cavity;
the check valve cavity is provided with steps; and
the valve seat is arranged on a bottom plate of the check valve cavity; the cylindrical valve core sleeves the valve cavity and covers the radial air outlet hole; the valve body is inserted into the check valve cavity, a lower end of the valve cavity is inserted into the cavity body with the upper opening, and the axial pin is inserted into a pin hole that is at a lower end of the valve cavity and is provided with a lower opening; the steps support the annular seat, and the annular seat is hermetically sealed with the check valve cavity.

According to the check valve on a sub-machine of a soda fountain, a lower end face of the cylindrical seat is provided with an air guide cavity with a lower opening, and the air guide grooves are communicated with the air guide cavity.

The check valve on a sub-machine of a soda fountain further includes a sealing gasket, where the sealing gasket is arranged at the top of the valve body.

In the check valve on a sub-machine of a soda fountain according to the present disclosure, such a structure can prevent air flow from flowing back and improve the sealing performance is improved, and is convenient to assemble.

### BRIEF DESCRIPTION OF THE DRAWINGS

FIG. 1 is a sectional view of the present disclosure;

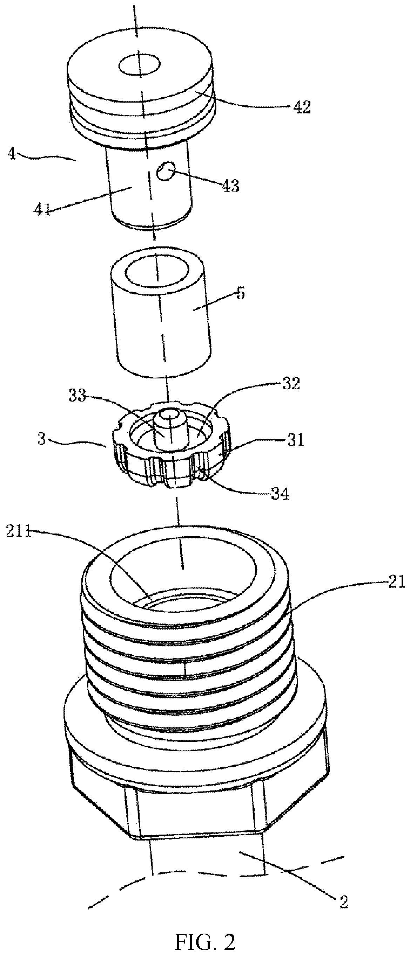

FIG. 2 is a first 3D exploded view of a check valve assembly according to the present disclosure; and

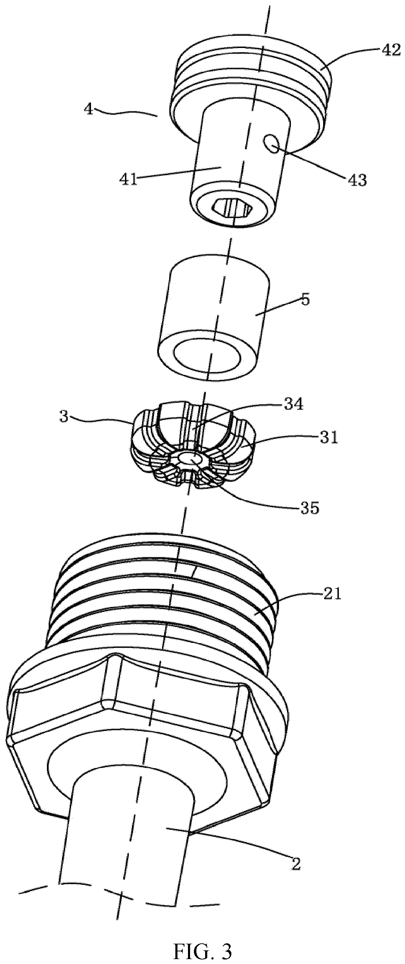

FIG. 3 is a second 3D exploded view of a check valve assembly according to the present disclosure.

### DESCRIPTION OF THE EMBODIMENTS

The present disclosure will be further described below in conjunction with the accompanying drawings.

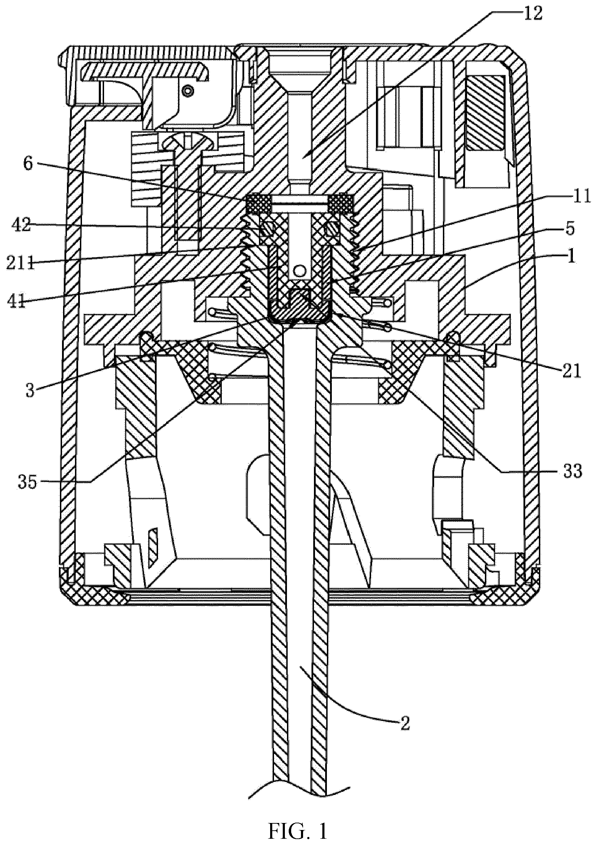

As shown in FIG. 1, a check valve on a sub-machine of a soda fountain includes a main body 1 of the sub-machine and an air nozzle rod 2, where the air nozzle rod 2 is connected to the main body 1, the main body 1 is provided with an internal thread cavity 11 with a lower opening and an air inlet channel 12 communicated with the internal thread cavity,
the air nozzle rod 2 is provided with a check valve cavity 21 with an external thread; and
the check valve further includes a check valve assembly, the check valve assembly is arranged in the check valve cavity 21, and the check valve cavity 21 is screwed with the internal thread cavity 11.

The check valve assembly includes a valve seat 3, a valve body 4 and a cylindrical valve core 5 made of a rubber material,
the valve seat 3 includes a cylindrical seat 31, a cavity body 32 arranged at an upper end of the cylindrical seat and provided with an upper opening, and an axial pin 33 arranged on the cavity body, and the valve seat 3 is provided with air guide grooves 34 located on a circumferential surface and a bottom end face of the cylindrical seat;
the valve body 4 includes a valve cavity 41 with an upper opening, an annular seat 42 surrounding an upper end of the valve cavity, and a radial air outlet hole 43 formed in the valve cavity;
the check valve cavity 21 is provided with steps 211; and
the valve seat 3 is arranged on a bottom plate of the check valve cavity 21; the cylindrical valve core 5 sleeves the valve cavity 41 and covers the radial air outlet hole 43; the valve body 4 is inserted into the check valve cavity 21, a lower end of the valve cavity 41 is inserted into the cavity body 32 with the upper opening, and the axial pin 33 is inserted into a pin hole that is at a lower end of the valve cavity 41 and is provided with a lower opening; the steps 211 support the annular seat 42, and the annular seat 42 is hermetically sealed with the check valve cavity 21.

A lower end face of the cylindrical seat 31 is provided with an air guide cavity 35 with a lower opening, and the air guide grooves 34 are communicated with the air guide cavity 35.

The check valve on a sub-machine of a soda fountain further includes a sealing gasket 6, where the sealing gasket 6 is arranged at the top of the valve body 4.

When the present disclosure is in use, carbon dioxide gas in a steel cylinder of the soda fountain enters the valve cavity 41 of the valve body 4 through the air inlet channel 12. Under the action of gas pressure, there is a gap between the cylindrical valve core 5 and the valve cavity 41. The gas enters the gas nozzle rod through the radial air outlet hole 43, the air guide groove 33, and the air guide cavity 35; and when no pressure gas is input, the cylindrical valve core 5 and the valve cavity 41 are closely attached to prevent air leakage.

The above are only preferred implementations of the present disclosure. It should be noted that for those of ordinary skill in the art, several improvements and modifications may be made without departing from the principle of the present disclosure, and are also regarded as falling within the protection scope of the present disclosure.

## Claims

1. A check valve on a sub-machine of a soda fountain, comprising a main body of the sub-machine and an air nozzle rod, wherein the air nozzle rod is connected to the main body, the main body is provided with an internal thread cavity with a lower opening and an air inlet channel communicated with the internal thread cavity,
the air nozzle rod is provided with a check valve cavity with an external thread; and
the check valve further comprises a check valve assembly, the check valve assembly is arranged in the check valve cavity, and the check valve cavity is screwed and hermetically sealed with the internal thread cavity.

2. The check valve on a sub-machine of a soda fountain according to claim 1, wherein the check valve assembly comprises a valve seat, a valve body and a cylindrical valve core made of a rubber material,
the valve seat comprises a cylindrical seat, a cavity body arranged at an upper end of the cylindrical seat and provided with an upper opening, and an axial pin arranged on the cavity body, and the valve seat is provided with air guide grooves located on a circumferential surface and a bottom end face of the cylindrical seat;
the valve body comprises a valve cavity with an upper opening, an annular seat surrounding an upper end of the valve cavity, and a radial air outlet hole formed in the valve cavity;
the check valve cavity is provided with steps; and
the valve seat is arranged on a bottom plate of the check valve cavity; the cylindrical valve core sleeves the valve cavity and covers the radial air outlet hole; the valve body is inserted into the check valve cavity, a lower end of the valve cavity is inserted into the cavity body with the upper opening, and the axial pin is inserted into a pin hole that is at a lower end of the valve cavity and is provided with a lower opening; the steps support the annular seat, and the annular seat is hermetically sealed with the check valve cavity.

3. The check valve on a sub-machine of a soda fountain according to claim 2, wherein a lower end face of the cylindrical seat is provided with an air guide cavity with a lower opening, and the air guide grooves are communicated with the air guide cavity.

4. The check valve on a sub-machine of a soda fountain according to claim 2 or 3, further comprising a sealing gasket, wherein the sealing gasket is arranged at the top of the valve body. check valve on sub-machine of soda fountain
